# EUROPEAN PATENT SPECIFICATION

(11) **EP 0 242 636 B1**
(45) Date of publication and mention of the grant of the patent: **28.07.1993**
(21) Application number: 87104583.7
(22) Date of filing: 27.03.1987
(51) Int. Cl.: G02B 3/00, G02B 6/10, B29D 11/00

(54) **Plastic optical transmission medium, process for producing the same and array of lenses using the same**
Optisches Kunststoff-Transmissionsmedium, zugehöriges Herstellungsverfahren und Linsenanordnung mit solchem Medium
Moyen de transmission optique en matière plastique, procédé de fabrication et arrangement de lentilles comportant un tel moyen

(30) Priority: 27.03.1986 JP 67183/86; 12.05.1986 JP 106751/86; 15.05.1986 JP 111089/86
(43) Date of publication of application: 28.10.1987
(73) Proprietor: MITSUBISHI RAYON CO., LTD., Tokyo 104 (JP)
(72) Inventor: Yamamoto, Takashi, Saiki-gun, Hiroshima (JP); Mishina, Yoshihiko, Otake-shi, Hiroshima (JP); Oda, Masaaki, Otake-shi, Hiroshima (JP)
(74) Representative: Bühling, Gerhard, Dipl.-Chem.

(56) References cited:
- EP-A- 0 208 159
- FR-A- 2 019 466
- US-A- 3 658 407
- US-A- 3 950 074
- PATENT ABSTRACTS OF JAPAN, vol. 7, no. 121 (P-199)[1266], 25th May 1983; & JP-A-58 38 901

## Description

The present invention relates to a cylindrical optical transmission element according to the preamble of claim 1, a process for producing the same and an array of lenses consisting of those cylindrical optical transmission elements.

It has conventionally been known to use, as an index-distributed (graded-index) lenses or optical fibers, a transparent cylindrical body or fiber in which the index varies continuously in line with a quadratic of the distance in the radius direction from the interior toward the surface thereof. For example, an index-distributed lens comprising a transparent cylindrical substance may be used for image transmission etc. Rays of light incident upon one end face of the body progress therein, go out from another end face and form an image. An array of lenses for use in for example, photocopiers and set by using such lenses must have high resolving power and be good in optical properties.

The said index-distributed lens is capable of forming an image only when it has the ideal index distribution expressed by the equation: ${\text{N(r) = N}}_{\text{D}} \text{(1-Ar²)}$ in which N(r) is a refractive index at the point of the distance r from the central axis in the radius direction, N_{D} is a refractive index on the central axis, and A is a positive constant.

FR-A 2,019,466 describes a light conducting device comprising a cylindrical organic resin body having a center axis and having a gradient in refractive index substantially in accordance with the aforementioned equation, wherein said resin body comprises a transparent solid mixture of at least two polymers which are mixable into optical homogeneity, the first of said polymers having a higher refractive index and a different solubility in a solvent than the second of said polymers. Each of the polymers is present at the axis of the aforementioned body in a predetermined proportion to provide a predetermined index of refraction wherein the proportion of the first polymer present in said mixture decreases and the proportion of the second polymer present in the mixture increases progressively and steadily from said predetermined proportion in the radial direction from the axis of the body towards the periphery thereof, thereby providing the gradient in refractive index.

When the index distribution or the positive constant A near the central axis is different from that near the periphery, the lens becomes inferior in the resolving power and can not be used for photocopiers and the like.

Further, even when the index distribution near the periphery deviates slightly from an ideal distribution, the lens causes the flare formed by such irregularity of the index distribution and outer rays incident from the periphery of the lens. The flare is a faded light harmful for the image formation and causes deterioration of the resolving power of a lens and a contrast of an image.

The Japanese Patent Open-Laid Application No. 58-38901/1983 teaches a method for preventing occurrence of flare, which method comprises subjecting the surrounding face of the index-distributed lens to a chemical etching and changing said face into a coarse face having fine convexes or concaves. Such coarse face may radiate needless rays progressing toward the outer layer of the lens therefrom by the scattering thereof and may prevent transmission of the outer rays in the lens by the diffused reflection thereof. The U.S. Patent Specification No. 3 658 407 discloses a black resin to be used as an adhesive for combining lenses.

US-B 3,950,074 discloses an image-transmitting light conducting fibre array made up of fibres each of which is a cylindrical member of a single light-conducting material having an outer peripheral surface with a multiplicity of alternate indented and protuberant portions. The outer periphery of said cylindrical member is coated with a light adsorbent material which fills said indented portions to a depth sufficient to bring the outer surface thereof generally level with the outermost surface of said protuberant portions. Thereby a fibre with a substantially uniform outside diameter is obtained and the fibres are bound together in parallel side by side by a bonding material.

The above-mentioned conventional methods, however, cause a leakage of light and deterioration of optical properties by reason of the occurrence of transparent parts among adjacent lenses caused by separation of black pigment of an adhesive between lenses as well as by reason of high viscosity of an adhesive which causes unevenness of permeation thereof into the coarse surrounding face.

In addition, the thus coarse surrounding face of lens causes stress concentration by reason of its keen concaves or convexes, and has weak mechanical strength due to relatively deep crack. It, therefore, is apt to cause break down of lens at the assembly thereof.

Further, the optical transmission medium is required, in recent years, to have a reduced quantity of light to be transmitted for keeping sensitivity adequate for lenses used with a light receptor devices such as CCD image sensor used in an electronic blackboard.

There are several methods for reducing quantity of light to be transmitted, such as reducing a diameter of lens, forming light reducing mask on the end faces of the lens and the like. When the diameter of lens is reduced, the mechanical strength of lens weakens and handling liability of lens to be set into arrays or processability of assembling an array become worse.

When the light-reducing mask is used, the manufacturing cost of lenses become expensive.

It is one object of the present invention to provide a cylindrical optical transmission element free from troubles derived from irregularity of the index distribution, as well as a process for producing said element.

It is another object of the present invention to provide a cylindrical optical transmission element capable of preventing the flare more perfectly than the conventional mediums, as well as a process for producing said element.

It is still another object of the present invention to provide a cylindrical optical transmission element capable of controlling quantity of light to be transmitted therethrough, as well as a process for producing said element.

It is still another object of the present invention to provide an array of lenses each consisting of a cylindrical optical transmission element.

These objects are achieved by the cylindrical optical transmission element according to claim 1, the process according to claim 7 and an array of lenses according to claim 13.

The invention is advantageously developed by the measures mentioned in the sub claims.

Fig. 1(A) shows a longitudinal cross section of an example of a cylindrical optical transmission element of the present invention, and Fig. 1(B) shows its lateral cross section.

Figs. 2 through 4 show outlines of apparatuses used for producing the cylindrical optical transmission element according to the present invention.

Figs. 5 and 6 show lateral cross sections of examples of an array of lenses according to the present invention.

Figs. 7(A) through (D) show illustrations for explanating the index distribution of examples of the cylindrical optical transmission element of the present invention.

Fig. 8 shows an outline of an apparatus for observing a lattice image formed by using a cylindrical optical transmission element of the present invention.

Figs. 9(A) and (B) respectively show lattice images formed by using a cylindrical optical transmission element having no layer containing a light-absorbing substance and a cylindrical optical transmission element having said layer of the present invention.

The cylindrical optical transmission element of the present invention may be used as a single lens in the shape of a cylinder. Such single lens may be used for a connector of optical fibers, beam splitting lens for an optical fiber, pickup lens and the like. In this case, an image to be formed may be inverted. The lens is, in general, used in rather short length and usually has a length of 1 to 10 mm and a diameter of 1 to 5 mm.

Another important use of the medium is an array of lenses in which many cylindrical lenses are arranged in parallel for forming an erect image having equal magnification. The array of lenses may be used for a photocopier, a facsimile, an electronic blackboard, a liquid crystal printer, a laser printer, etc. The size of the lens is determined in consideration of a using form of an array. In usual, those having a diameter of 0.1 to 3 mm and a length of 5 to 30 mm are used.

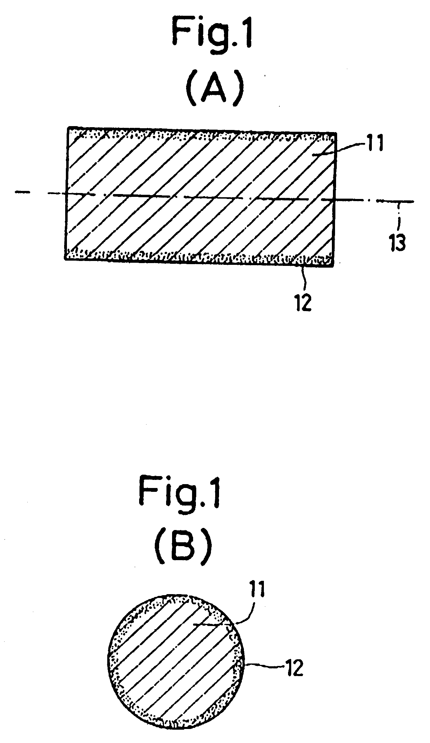

Figs. 1(A) and (B) respectively show longitudinal and lateral cross sections of one example of a cylindrical optical transmission element of the present invention.

A cylindrical optical transmission element has a transparent cylindrical body (11) and has such an index distribution that the refractive N(r) at the distance of r from the central axis 13 in the radius direction is expressed by the equation ${\text{N(r) = N}}_{\text{D}} \text{(1-Ar²}$ ) in which N_{D} is a refractive index at the central axis 13 and A is a positive constant. An annular layer containing a light-absorbing substance 12 is formed adjacent the outer cylindrical surface of the body 11.

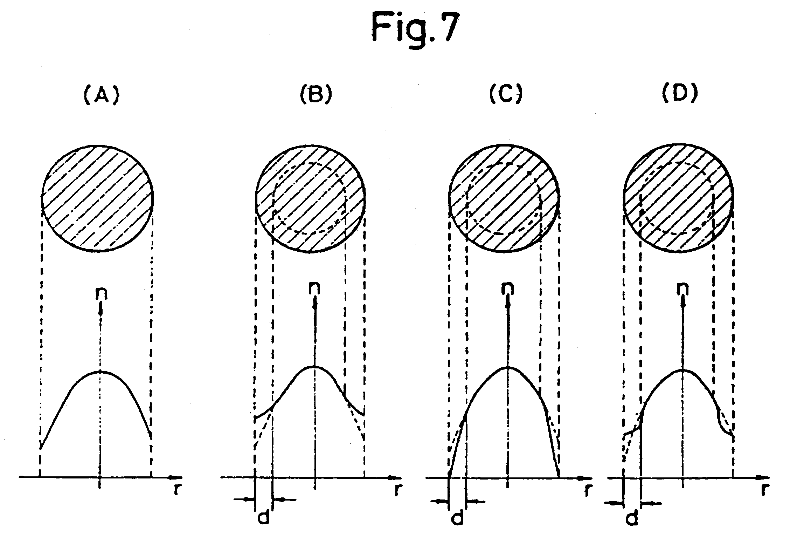

The body 11 as shown in Fig. 1 has an ideal index distribution. However, the cylindrical optical transmission element of the present invention may have various distributions missing an ideal form as shown in Figs. 7(A) through (D).

Fig. 7(A) shows a lens or transmission element having said ideal index distribution. The lens, however, causes the flare and has low resolving power if it has no layer containing a light-absorbing substance.

Figs. 7(B), (C) and (D) show lenses including a periphery of the thickness of d having an index distribution different from that of the central portion of the lens.

The lens shown in Fig. 7(B) includes a periphery having larger index than the central portion thereof. As a result, a square lattice image to be formed has a peripheral portion having an interval of a square lattice smaller than the central portion of the image.

The lens shown in Fig. 7(C) includes a periphery having smaller index than the central portion thereof. As a result, a square lattice image to be formed has a peripheral portion having an interval of a square lattice larger than the central portion of the image.

The lens shown in Fig. 7(D) has a complex form of the index distributions as shown in Figs. 7(B) and (C). The image to be formed has more complex distortion at the periphery thereof.

Since the lenses as shown in Figs. 7(B), (C) and (D) have small resolving power and cause big distortion of an image to be formed, they have hardly been used for the practical uses, for example, photocopiers necessitated to have high resolving power.

Even when the element should have the index distribution as shown in Figs. 7(B), (C) and (D), the cylindrical optical transmission element of the present invention may prevent such distortion of an image to be formed by means of a light-absorbing substance which is capable of absorbing rays causing an image distortion.

Further, even in the case of the index distribution as shown in Fig. 7(A), the light-absorbing substance forming a layer in accordance with the present invention may well prevent the flare as compared with the conventional means for preventing flare. In addition, the present invention achieves effective elimination of flare very easily without causing mechanical damage of the lens.

As mentioned above, the light-absorbing substance used in the present invention has synergy in concealing irregularities of the index distribution and absorbing flare in the periphery of the element.

The thickness (d) of the layer containing a light-absorbing substance preferably is equal to or near that of the peripheral portion in which irregularity of the index distribution exists, i.e. 5 µm or more.

In general, disorders of the index distribution are liable to occur in the periphery of the element, in particular that of the thickness of 200 µm or less for reason that the peripheral portion must have large gradient of the index, in other words, it must have wide change of the composition of the forming material.

When the radius of the optical transmission element is represented by r, the cross-sectional area of the portion in which rays of light are transmitted may be expressed by π(r-d)². When the value of 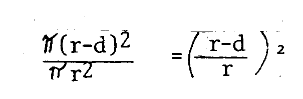
is too small, that is 0.4 or less, irregularity of the quantity of light becomes too large, so that an array of lenses loses practical value.

That is to say, the preferable upper limit of d value in the present invention may be expressed by the following inequality: d ≦ 0.3 r. The preferable lower limit of d value may be determined by the action force of the light-absorbing substance to be used. The d value is 5 µm or more, preferably 8 µm or more.

The preferable examples of the materials for forming a cylindrical optical transmission element are described in the Japanese Patent Open-Laid Applications Nos. 60-127553 and 60-130837.

Such preferable examples are represented by a cylindrical optical transmission element having therein a continuous refractive index distribution, characterized by being composed of at least one of a thermoplastic polymer (A) and a polymer derived from a monomer (B) or a mixture of two or more monomers including said monomer (B) and having a refractive index different from that of said thermoplastic polymer (A), the latter polymer having a continuous concentration distribution from the center of said optical transmission element as a molded product towards the surface thereof.

More preferable examples are represented by an optical transmission element comprising a mixture of (A) component consisting of polyvinylidene fluoride or a copolymer containing as a chief monomeric unit vinyliden fluoride and (B) component consisting of polymethyl methacrylate or a copolymer containing as a chief monomeric unit methyl methacrylate, the ratio of the amounts of the components (A) and (B) varying in the range of from the interior toward the surface of the optical transmission element so as to form the distribution of the refractive index therein.

The optical transmission element of the present invention may contain as a major constituent a mixture of one or more polymers selected from said (A) components and one or more polymers selected from said (B) components. As the (A) components, polyvinylidene fluoride or copolymers containing as a chief monomeric unit vinylidene fluoride may be used. Illustrative examples of such copolymers include copolymers of vinylidene fluoride with fluorine containing vinyl compound such as tetrafluoroethylene, trifluoroethylene, hexafluoropropylene, vinyl fluoride, chlorotrifluoroethylene, perfluoroalkyl vinyl ether, hexafluoroacetone and the like, an ester of methacrylic acid such as methyl methacrylate, butyl methacrylate, vinyl acetate.

Among these copolymers, a copolymer of vinylidene fluoride with tetrafluoroethylene or trifluoroethylene is preferable in view of heat resistance, mechanical properties, processability, balance of refractive index and other practical properties. The content of vinylidene fluoride in the copolymer thereof with tetrafluoroethylene is preferably at least 60% by mol. In the case of the copolymer with trifluoroethylene, the content of vinylidene fluoride is preferably at least 20% by mol.

As the (B) component, polymethyl methacrylate or a copolymer containing as a chief monomeric unit methyl methacrylate is used. The comonomer may be methacrylate such as ethyl methacrylate, propyl methacrylate, n-butyl methacrylate, t-butyl methacrylate, cyclohexyl methacrylate, phenyl methacrylate, benzyl methacrylate, 2,2,2-trifluoroethyl methacrylate, β-hydroxyethyl methacrylate, glycidyl methacrylate, β-methylglycidyl methacrylate, acrylate such as methyl acrylate, ethyl acrylate, propyl acrylate, butyl acrylate, methacrylic acid, acrylic acid, styrene, - methylstyrene and the like. However, the comonomer should not be limited to these monomers. The copolymer may contain a little amount of acrylonitrile, maleic anhydride and various other comonomers.

The content of the comonomers other than methyl methacrylate is 50% by weight or less, preferably 30% by weight or less, more preferably 15% by weight or less.

If desired, more than two types of polymers may be used as the (A) or (B) component.

The mixture of said (A) and (B) components used in accordance with the present invention is good in mutual solubility and may mostly obtain dispersion in the level of molecules. Although polymers having much different refractive indexes from each other are to be mixed, transparency may be achieved in a wide range of proportions of the mixed polymers. Transparency may be attained in such a range that the content of the (A) component is 0-80% by weight, preferably 0-70% by weight. When the content of the (A) component surpasses 80% by weight, the vinylidene fluoride polymer tends to crystallize, so that the transmission element becomes lactescent and opaque. That is to say, the optical transmission element in accordance with the present invention may have distribution of the concentration of the (A) component in the numerical range of 0-80% by weight, preferably 0-70% by weight and in the spatial range of from the interior toward the surface thereof in at least the part thereof. The refractive index may vary in accordance with the distribution of the concentration of the (A) component.

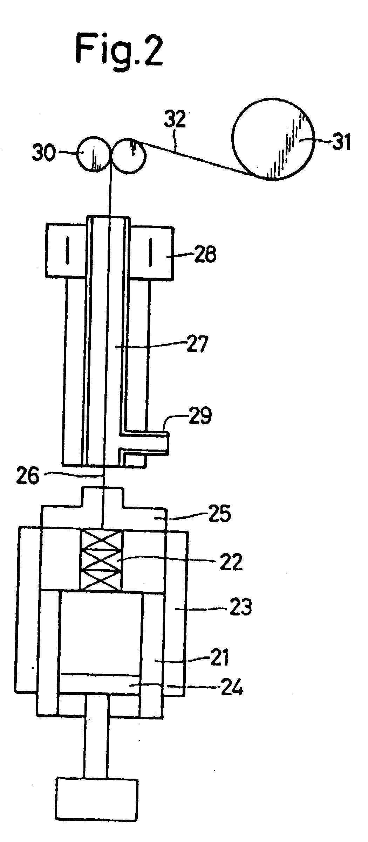

Further, a preferable example of a process for producing the optical transmission element of the present invention will be described in more detail referring to an example wherein vinylidene fluoride-tetrafluoroethylene copolymer and polymethyl methacrylate are used. Further, an example of the apparatus for producing the optical transmission element of the present invention will be illustrated in Fig. 2 as an outline.

A mixture of vinylidene-tetrafluoroethylene copolymer, polymethyl methacrylate and methyl methacrylate monomer is fed into a cylinder 21, followed by pushing it out quantitatively by means of a piston 24 while heating it by means of a heater 23, blending the mixture homogeneously at a kneading part 22, and extruding the mixture from a nozzle 25 to obtain a strand fiber 26, leading this strand fiber 26 to a volatilization part 27 where methyl methacrylate monomer is volatilized from the surface of the fiber by means of an inert gas such as air, N₂, Ar, etc. introduced through a gas-introducing port 29, to yield a distribution of the concentration of methyl methacrylate inside the fiber. This concentration distribution is controlled by the thickness of the strand fiber, extruded quantity, take-up rate of the fiber, staying time at the volatilization part, temperature at the volatilization part, flow quantity of gases, etc. in accordance with the object, followed by leading the resulting fiber to an active light-irradiating part 28 to polymerize the remaining monomer and solidifying, and taking up on a take-up drum 31 via nip rolls 30 to continuously obtain the objective cylindrical plastics optical transmission body 32. In addition, the time at which the light irradiation is carried out in the present invention may be after the volatilization part, but if the condition establishment is possible, volatilization and light-irradiation may be carried out at the same time. Further, the volalitization may be carried out in a current of an inert gas such as air, N₂, Ar, etc., and may also be carried out under reduced pressure. Moreover, in order to further reduce the quantity of the remaining monomer in the optical transmission medium, a heat polymerization part may be provided after the light-irradiating part, or a process of further carrying out the light-irradiation under heating to the glass transition point (Tg) of the polymer or higher is also preferred.

Particularly a process of carrying out spinning upwards and pulling up the fiber vertically is preferred in that strand uneveness of the fiber is reduced and the controlling width of the volatilization conditions is broadened.

Further it is an effective means to add known photo-initiator, promotor or sensitizer for promoting photo-polymerization to the above mixture as the raw material and simultaneously use these.

The above mixture becomes translucent or milk-white at low temperatures since vinylidene fluoride-tetrafluoroethylene copolymer crystallizes; hence the storage temperature of the mixture is preferably 30°C or higher, more preferably 60°C or higher.

Similarly, the temperature at the volatilizing part is also preferred to be high, that is, preferred to be in the range of 40° to 110°C. At temperatures lower than 40°C, vinylidene fluoride copolymers sometimes crystallize during the volatilization and the attenuation increases. At temperatures exceeding 110°C, methyl methacrylate bubbles; hence such high temperatures are also undesirable.

At that time, in order to enhance the storage stability of the above mixture and also in order to prevent the viscosity change i.e. the thermal polymerization at the time of molding the mixture into the form of fiber or the like, it is preferred to use a so far known polymerization inhibitor.

The thus prepared mixture causes no thermal polymerization at temperatures of about 100°C, but in order to obtain a homogeneous optical transmission element, it is necessary to knead the mixture sufficiently homogeneously.

In the kneading operation, it is possible to employ a so far known kneading apparatus. Further, in order to obtain an optical transmission element having a diameter of about 0.1 to 5 mm, the viscosity of the mixture at its extrusion temperature is particularly important, and is preferred to be in the viscosity range of 100 Pa·s to 1 x 10⁴ Pa·s (1,000 to 100,000 poises), preferably 500 Pa·s to 5 x 10³ Pa·s (5,000 to 50,000 poises).

The viscosity adjustment may also be carried out by adjusting the molecular weight of polymethyl methacrylate, besides the concentration adjustment. Particularly those having an intrinsic viscosity (n) of 0.5 to 3.0 g/dl (as measured in methylethyl ketone at 25°C) are preferred in that the viscosity adjustment is not only easily carried out, but also the storage stability and stringiness of the mixture are superior.

As the active light source 8 capable of being used in the present process, carbon-arc lamp, ultra-high pressure mercury lamp, high pressure mercury arc lamp, low pressure mercury arc lamp, chemical lamp, xenon lamp, laser rays, etc. emitting a light having a wavelength of 150 to 600 nm may be employed. Further, in some cases, it does not matter if polymerization is carried out by irradiation of electron rays. Further, in order to complete the polymerization, or in order to make the quantity of the remaining monomer as small as possible, it is effective to carry out the photo-irradiation at two stages or the irradiation together with thermal polymerization. In succession to the polymerization, the remaining monomer may be removed by drying with hot air, etc.

The quantity of the remaining monomer in the optical transmission element of the present invention is preferred to be as small as possible, and 5% by weight or less, preferably 3% by weight or less, more preferably 1.5% by weight or less. This can be achieved according to the above processes.

In the present invention, various types of dyes, dyestuffs and pigments may be used as a light-absorbing substance. For the purpose of absorbing any rays in the visible region, a black-colored mixture of many dyes, dyestuffs or pigments may preferably be used. Further, carbon black, graphite carbon, carbonized organic substance and other substances capable of absorbing light may be used as a light-absorbing substance. It is, however, industrially preferred to use oil-soluble dyes for the reason of their rapidity to form a layer containing a light-absorbing substance.

In the present invention, the light-absorbing substance should be adequately contained in the cylindrical optical transmission element. The substance should preferably be dispersed in the layer containing it. In this case, the layer may be formed by dispersing or combining dye molecules or pigment particles in the field of physical or chemical affinity, or by containing carbon black in the state of single dispersion or coagulation. Accordingly, a light-absorbing substance to be used may have a size in the range of from some nanometers (some tens of angstroms) to some tens of micrometers. The size may be determined in accordance with the substance constituting the optical transmission element. The light-absorbing substance need not have a form of a particle and may take the form of a carbonized and metamorphosed substance constituting the optical transmission element.

The concentration of a light-absorbing substance in the layer containing it is in the range of 0.01 to 20% by volume.

In addition, the size and concentration of the light-absorbing substance contained is not necessary to be the same when observed in the direction of the thickness of the layer containing it. It is rather advantageous that the gradient of the concentration exists in the direction of from the interior toward the surface of the element.

The thickness of the layer containing a light-absorbing substance may be controlled by selecting solvent to be used, type of a light-absorbing substance to be used, mixing ratio thereof, temperature of a mixture liquid, or dipping time of the shaped substance.

The solvent to be used in the present invention may be any type of the solvent which is capable of dissolving one or more constituting substances of the shaped body. When the body is constituted by a mixture of two or more components, the solvent may be the type capable of dissolving every component or the type capable of dissolving one or a few components.

Illustrative examples of the solvent to be used in the present invention are as follows. When a cylindrical plastics optical transmission body is constituted by a copolymer of vinylidene fluoride and tetrafluoroethylene and polymethyl methacrylate, halogen-containing solvents such as methylene chloride and tetrafluoroethylene may be used to dissolve only polymethyl methacrylate. Ketones such as acetone and methylethyl ketone or esters such as ethyl acetate may be used to dissolve both the copolymer of vinylidene fluoride and tetrafluoroethylene and polymethyl methacrylate. Such solvents may be used in the same manner as above when the cylindrical plastics optical transmission body is constituted by a copolymer of vinylidene fluoride and hexafluoropropylene or constituted by a copolymer of vinylidene fluoride and hexafluoroacetone and polymethyl methacrylate.

The layer containing a light-absorbing substance may be formed by, for example, dipping the shaped body in a liquid containing a solvent and a light-absorbing substance and drying thus dipped body.

The array of lenses of the present invention may be constituted by setting the optical transmission elements in array using an adequate adhesive. The adhesive is preferably a type not transmitting light. The adhesive may be used to adhere a part of the elements at a few or several points of contact.

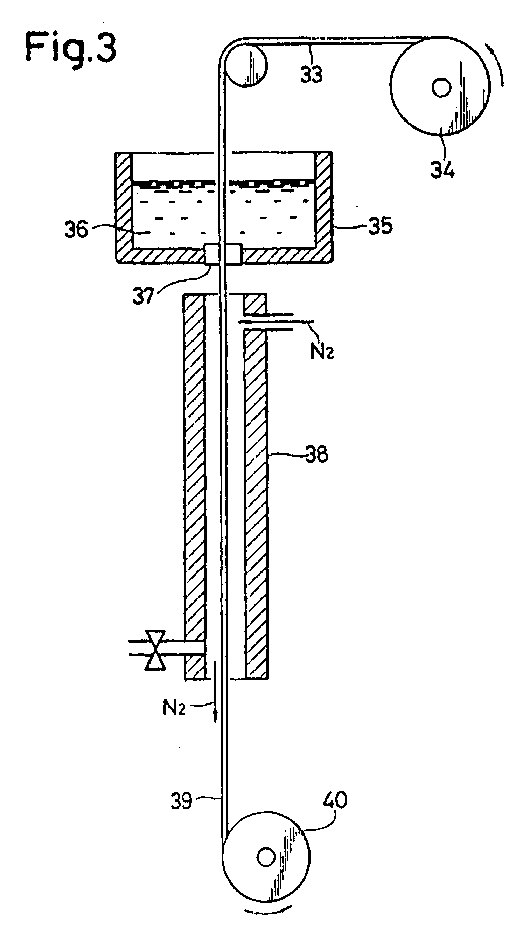

Fig. 3 shows an outline of an apparatus used for producing a cylindrical optical transmission element of the present invention. In this figure, 33 is a shaped body for forming a cylindrical optical transmission element. 34 is a bobbin for winding the shaped substance. 35 is a tank and 36 is a mixture liquid of said light-absorbing substance and said solvent reserved in the tank 35. 37 is a nozzle. 38 is a dryer tower. 39 is a cylindrical optical transmission element of the present invention. 40 is a bobbin for winding the medium 39.

The shaped body 33 wound on the bobbin 34 is dipped in a mixture liquid 36 so as to form a layer containing a light-absorbing substance under the surface of the body 33. Then the body 33 is fed into a dryer tower 38 and subject to solvent removal in a gas flow of nitrogen, air, etc.

The depth of the permeation of solvent depends on the temperature of the mixture liquid 36. The liquid 36 must be controlled in its temperature as well as its composition which should be adjusted to that of the first stage.

Fig. 3 illustrates a process in which a shaped body is used after the shaping step is completed. The medium of the present invention may be produced in a series of such shaping step and the dipping step. In this case, the shaped substance 33 is not wound on the bobbin 34, but supplied directly to the tank 35.

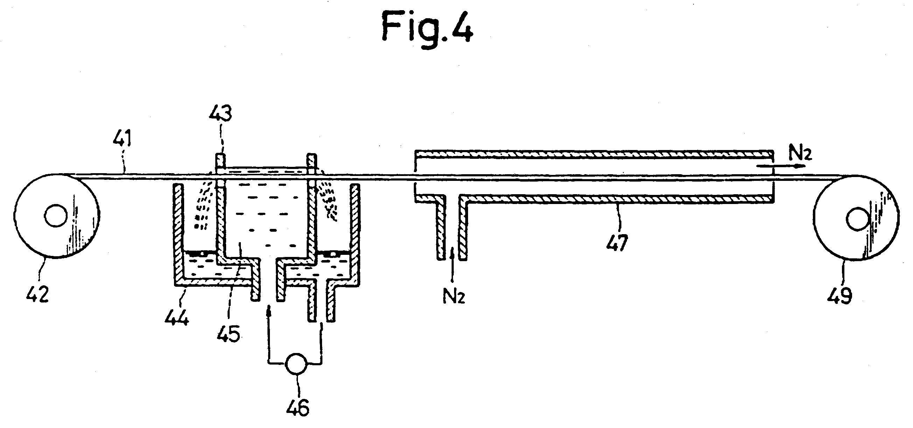

Fig. 4 also shows an outline of an apparatus used for producing a cylindrical optical transmission element of the present invention. The apparatus does not have a nozzle 37 as shown in Fig. 3. Such elimination of a nozzle enables treatment of many mediums.

In Fig. 4, a mixture liquid of a light-absorbing substance and a solvent 45 is circulated between tanks 43 and 44 by means of a pump 46. The liquid 45 is overflown from the tank 43 and comes into contact with a shaped substance 41. The thus dipped substance is then carried to a dryer tower 47 to eliminating a solvent.

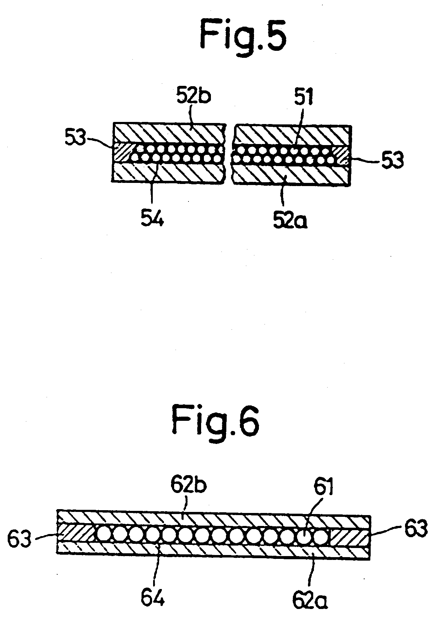

Fig. 5 shows an example of an array of lenses of the present invention.

The array as shown in Fig. 5 comprises upper and lower substrates 52A, 52B and spacers 53, 53. Many lens bodies 51,... each consisting of a cylindrical optical transmission element containing a light-absorbing substance are subjected to close-packing and arranged like brick accumulation. The substrates 52A, 52B are adhered to spacers 53, 53. An adhesive 54 is filled in clearances between the aforementioned lens bodies 51, ... and the substrates 52A, 52B as well as between the lens bodies 51, ... and the spacers 53, 53 so as to unite all parts in a body. The end faces of the array are ground so as to form parallel planes perpendicular to the light axis and to obtain an adequate lens length for forming an erect real image having equal magnification.

Fig. 6 also shows an example of an array of lenses each consisting of a cylindrical optical transmission element present invention, in which lens bodies 61,... are arranged in a row. 62A and B are substrates. 63, 63 are spacers. 64 is an adhesive. There are no restrictions on the number of lenses to be arranged and form of an arrangement. Since the surrounding faces of lenses do not have weakened mechanical strength due to bad conditions thereof, the number of lenses to be arranged may easily be increased. Further, the substrates do not necessitate high mechanical strength and may be any type of the material which is capable of conserving the shape of an array. That is to say, rather light and cheap resin boards may advantageously be used other than the conventional fiber-reinforced resin boards. In particular, polymethyl methacrylate resin board is preferred in view of its good weatherability.

The adhesive to be used may be chosen from those capable of preventing light transmission, such as epoxy type adhesives, silicone type adhesives and the like. The curing type thereof is not limited and may be heat curing type, two liquid-mixing type and the like.

The permeation mechanism of a light-absorbing substance in accordance with the present invention may vary depending on the selected combination of materials for forming a shaped substance and of a light-absorbing substance.

In the case of using a mixture of a copolymer of vinylidene fluoride and tetrafluoroethylene and polymethyl methacrylate (PMMA), chloroform and a dye soluble in chloroform, chloroform dissolves polymethyl methacrylate and, at the same time, swells said copolymer. Thus chloroform takes the role of a carrier for the permeation of dyes. Since chloroform dissolves and extracts only polymethyl methacrylate, voids occur at the position of PMMA thus dissolved. Therefore, the process of the present invention attains uneven face inside the element and the permeation of a light-absorbing substance.

The present invention will be explained more minutely by the following examples.

### Example 1

The mixture of 33 parts by weight of the copolymer comprising 80% by mole of vinylidene fluoride and 20% by mole of tetrafluoroethylene (refractive index N_{D} = 1.400), 33 parts by weight of polymethyl methacrylate prepared by continous bulk polymerization (refractive index N_{D} = 1.492), 33 parts by weight of methyl methacrylate, 0.1 part by weight of benzylmethyl ketal and 0.1 part by weight of hydroquinone was heated at 80°C, passed through a kneading part and extruded from a nozzle having a diameter of 2.0 mm. The thus prepared fiber was then heated at 80°C, passed through a volatilizing part in which nitrogen gas was flown at the rate of 10 l/min. and subsequently passed through the interior of cylindrically arranged six pieces of 400W high-pressure mercury lamps so as to irradiate light over approximately 5 minutes, followed by pulling up the fiber or shaped body by nip rollers and winding on a bobbin at the rate of 20 cm/min.

The diameter of thus obtained shaped body was 800 µm. The index distribution as measured by an interference microscope includes the index of 1.460 at the central axis and the index of 1.451 at the periphery of the shaped body. The refractive index was continuously lowered from the central axis toward the periphery of the shaped body. The thickness of the layer having irregularity of the index distribution was found to be 10 µm.

The NMR analysis taught the distribution of the concentration of the copolymer of vinylidene fluoride and tetrafluoroethylene. The content of said copolymer was varied in the range of from 33% by weight (at the central axis of the shaped body) to 43% by weight (at the periphery of the shaped body). The content of the residual methyl methacrylate monomer was 0.9% by weight in the whole of the body.

The thus obtained graded-index cylindrical plastics optical transmission body was dipped in a solution of 10% of a black oil-soluble dyestuff (known as Orient Oil Black HBB) in methylene chloride at 0°C for 30 minutes, and dried in nitrogen gas at 60°C for 10 minutes. The thus treated body was observed using a microscope and was found having a blackly dyed layer formed under the surface of the body and having a thickness of 15 µm.

As a result of the measurement of modulation transfer function (MTF) using slits of 6.4 rows per 1 mm, the blackly dyed medium had a MTF value higher by 20% than a body or element having not been dyed and was ascertained that it had an advanced resolving power and was capable of giving an advanced contrast to an image.

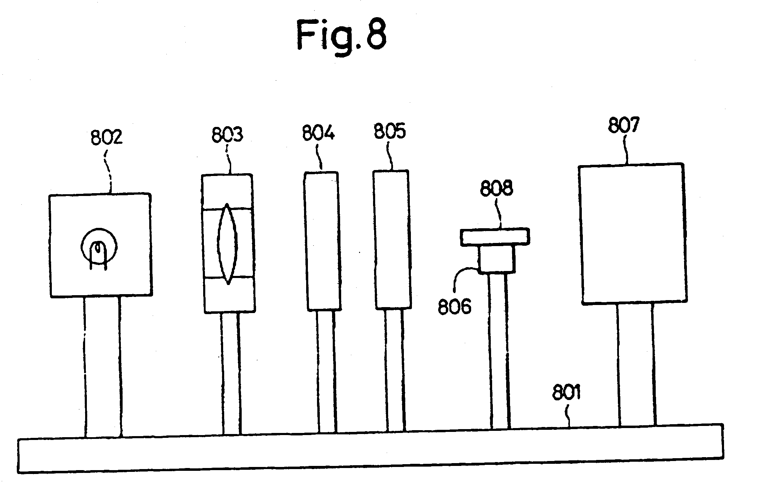

Further, lattice images were formed by using the thus black-colored optical transmission element and a non-colored optical transmission element by means of an apparatus as shown in Fig. 8.

In Fig. 8, 801 is an optical bench, 802 is a tungsten lamp used as light source, 803 is a light converging lens, 804 is a stop, 805 is a glass plate on which a square lattice of 0.1 mm interval is formed by the fine processing of the chrome layer of the chrome plated glass, 806 is a sample holder, 807 is a Polaroid® camera, and 808 is a sample subject to the evaluation.

Each sample as prepared was cut into length of one fourth of the period of the ray as measured based on undulation of He-Ne laser rays passing therethrough and polished at the end faces by a grinder so as to obtain flat faces parallel to each other and perpendicular to the major axis.

As seen from Fig. 8, the sample 808 as prepared was set on the sample holder 806. After the stop 804 was adjusted so as to let the light from the source 802 pass through lens 803, stop 804 and the glass plate 805 and enter the whole face of the sample, the positions of the sample 808 and Polaroid camera 807 were adjusted so as to focus the light on the Polaroid camera. As a result, the square lattice image was obtained and the distortion thereof was observed.

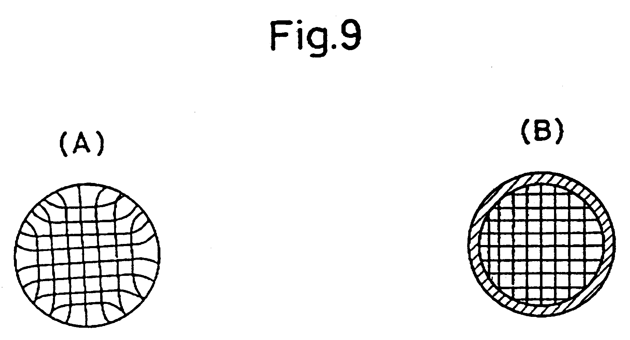

The thus observed lattice images are shown in Fig. 9. Fig. 9(A) shows a lattice image formed by using a non-colored lens. Fig. 9(B) shows a lattice image formed by using a black-colored lens. As seen from the figures, distortion of a lattice image existed at the periphery thereof when the non-colored lens was used. On the other hand, such distortion was eliminated by the black-colored lens.

### Example 2

A cylindrical optical transmission element was prepared in the same manner as in example 1, with the exception that acetone was used instead of methylene chloride.

The cross section of thus prepared element was observed, with the result that the layer containing black oil-soluble dyestuff was found to be formed all around the periphery of the element in the thickness of approximately 10 µm. Further, the MTF value of the element was measured and found to be same as that of the element prepared in example 1.

### Example 3

A cylindrical optical transmission element was prepared in the same manner as in example 1, with the exception that the temperature of the solution containing the black oil-soluble dyestuff was set to be 20°C.

The layer containing said black dyestuff was found to have a thickness of approximately 50 µm.

### Example 4

A cylindrical optical transmission element was prepared in the same manner as in example 1, with the exception that the production of the shaped body and the dipping thereof were successively carried out without winding the shaped body on the bobbin.

### Example 5

The mixture of 33 parts by weight of the copolymer comprising 80% by mole of vinylidene fluoride and 20% by mole of tetrafluoroethylene (refractive index N_{D} = 1.400), 33 parts by weight of polymethyl methacrylate prepared by continous bulk polymerization (refractive index N_{D} = 1.492), 33 parts by weight of methyl methacrylate, 0.1 part by weight of benzylmethyl ketal and 0.1 part by weight of hydroquinone was heated at 80°C, passed through a kneading part and extruded from a nozzle having a diameter of 2.0 mm. The thus prepared fiber was then heated at 80°C, passed through a volatilizing part in which nitrogen gas was flown at the rate of 10 l/min. and subsequently passed through the interior of cylindrically arranged six pieces of 400W high-pressure mercury lamps so as to irradiate light over approximately 5 minutes, followed by pulling up the thus obtained shaped body by nip rollers and winding on a bobbin at the rate of 20 cm/min.

The diameter of thus obtained shaped body was 800 µm. The index distribution as measured by an interference microscope includes the index of 1.460 at the central axis and the index of 1.451 at the periphery of the shaped body. The refractive index was continuously lowered from the central axis toward the periphery of the shaped body.

The NMR analysis taught the distribution of the concentration of the copolymer of vinylidene fluoride and tetrafluoroethylene. The content of said copolymer was varied in the range of from 33% by weight (at the central axis of the body) to 43% by weight (at the periphery of the body). The content of the residual methyl methacrylate monomer was 0.9% by weight in the whole of the body.

The thus obtained graded-index cylindrical plastics optical transmission body was dipped in a solution of 10% of a black oil-soluble dyestuff (known as Orient Oil Black HBB) in methylene chloride at 0°C for 30 minutes, and dried in nitrogen gas at 60°C for 10 minutes. The thus treated body was observed using a microscope and was found having a blackly dyed layer formed under the surface of the body or element and having a thickness of 15 µm.

As a result of the measurement of modulation transfer function (MTF) using slits of 6.4 rows per 1 mm, the blackly dyed element had a MTF value higher by 20% than a body or element having not been dyed and was ascertained that it had an advanced resolving power and was capable of giving an advanced contrast to an image.

### Example 6

The mixture of 33 parts by weight of the copolymer comprising 80% by mole of vinylidene fluoride and 20% by mole of tetrafluoroethylene (refractive index N_{D} = 1.400), 33 parts by weight of polymethyl methacrylate prepared by continous bulk polymerization (refractive index N_{D} = 1.492), 33 parts by weight of methyl methacrylate, 0.1 part by weight of benzylmethyl ketal and 0.1 part by weight of hydroquinone was heated at 80°C, passed through a kneading part and extruded from a nozzle having a diameter of 2.0 mm. The thus prepared fiber was then heated at 80°C, passed through a volatilizing part in which nitrogen gas was flown at the rate of 10 l/min. and subsequently passed through the interior of cylindrically arranged six pieces of 400W high-pressure mercury lamps so as to irradiate light over approximately 5 minutes, followed by pulling up the thus obtained shaped body by nip rollers and winding on a bobbin at the rate of 20 cm/min.

The diameter of thus obtained shaped body was 800 µm. The index distribution as measured by an interference microscope includes the index of 1.460 at the central axis and the index of 1.451 at the periphery of the body. The refractive index was continuously lowered from the central axis toward the periphery of the body.

The NMR analysis taught the distribution of the concentration of the copolymer of vinylidene fluoride and tetrafluoroethylene. The content of said copolymer was varied in the range of from 33% by weight (at the central axis of the body) to 43% by weight (at the periphery of the body). The content of the residual methyl methacrylate monomer was 0.9% by weight in the whole of the body.

The thus obtained graded-index cylindrical plastics optical transmission body was dipped in a solution of 10% of a black oil-soluble dyestuff (known as Orient Oil Black HBB) in methylene chloride at 0°C for 30 minutes, and dried in nitrogen gas at 60°C for 10 minutes. The thus treated body was observed using a microscope and was found having a blackly dyed layer formed under the surface of the body or element and having a thickness of 15 µm.

As a result of the measurement of modulation transfer function (MTF) using slits of 6.4 rows per 1 mm, the blackly dyed element had a MTF value higher by 20% than a body or element having not been dyed.

### Example 7

A cylindrical optical transmission element was prepared in the same manner as in example 1, with the exception that a black-colored oil-soluble dyestuff, Orient-Balifast-Color 3820, was used. The thickness of thus formed layer containing black-colored dyestuff was determined to be 50 µm, and MTF value was the same with that of example 5.

### Example 8

An array of lenses was prepared in the form as shown in Fig. 5 by using the elements prepared in example 5. Fiber-reinforced epoxy resin board and epoxy adhesive containing carbon black were used as substrates and an adhesive, respectively.

As a result of the measurement of MTF using slits of 6.4 rows per 1 mm, the array had a MTF value higher by 20% than an array using non-colored elements. The resolving power and the contrast of an image formed were found to be advanced.

### Example 9

An array of lenses was prepared by using the elements prepared in example 1 and applying an adhesive at regular intervals from the end faces of the elements. The MTF value was found to be the same with that of the element prepared in example 1.

### Example 10

An array of lenses was prepared in the form as shown in Fig. 6 by using the elements prepared in example 5. Polymethyl methacrylate resin boards and an acrylic adhesive containing carbon black were used as substrates and an adhesive, respectively.

Further an array was prepared in the same manner as above, with the exception that fiber-reinforced epoxy resin boards were used as substrates.

Those arrays were the same in view of the properties or easiness of handling. The former array was, however, industrially advantageous in view of its light weight, cheap cost.

### Example 11

A cylindrical optical transmission element was prepared in the same manner as in example 1 , with the exception that a solution of 1% of a black oil-soluble dyestuff (known as Orient-Nigrocin-Base EX®) in chloroform was used and that the dipping was carried out at 5°C for 15 seconds. The thus prepared element was found to have a blackly-dyed layer having a thickness of 8 µm which can not cover up unevenness of the index distribution at the periphery of the element. MTF value was higher by 10% than a non-colored element.

### Example 12

An optical transmission element was prepared in the same manner as in example 1, with the exception that the dipping time was 7 seconds. The thickness of the blackly-dyed layer was 5 µm and MTF value was higher by 5% than a non-colored element.

### Example 13

An optical transmission element was prepared in the same manner as in example 1, with the exception that the dipping time was 5 seconds. The thickness of the blackly-dyed layer was 4 µm and MTF value was higher in 3% than a non-colored element.

The results are all shown in the following table 1:

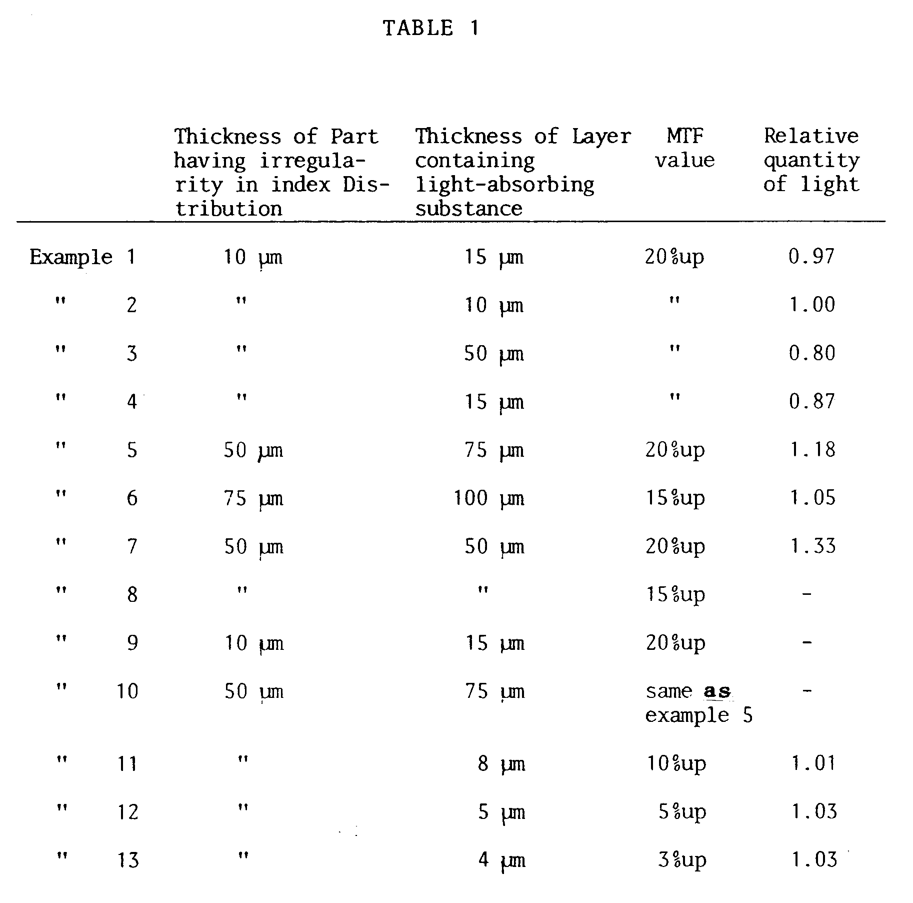

## Claims

1. A cylindrical optical transmission element comprising a cylindrical body (11) wherein the refractive index varies continuously and radially from the central axis (13) towards the outer cylindrical surface, and an annular layer (12) which is formed adjacent said outer cylindrical surface and which contains a light-absorbing substance,
characterized in that
said body is made of plastics material, said layer is formed within the body so as to form an integral part of it and has a thickness of 5 µm or more, and said light-absorbing substance is dispersed in said layer.

2. A cylindrical optical transmission element according to claim 1, wherein said body is constituted chiefly by a plastics material mixture comprising a combination of an organic polymer having a high refractive index and an organic polymer having a low refractive index.

3. A cylindrical optical transmission element according to claim 2, wherein said organic polymer having a high refractive index is polymethyl methacrylate and wherein said organic polymer having a low refractive index is a copolymer of vinylidene fluoride and tetrafluoroethylene.

4. A cylindrical optical transmission element according to claim 2, wherein said organic polymer having a high refractive index is polymethyl methacrylate and wherein said organic polymer having a low refractive index is a terpolymer of vinylidene fluoride, tetrafluoroethylene and hexafluoropropylene.

5. A cylindrical optical transmission element according to claim 1, wherein said light-absorbing substance is a black-colored oil soluble dyestuff.

6. A cylindrical optical transmission element according to claim 1, wherein the thickness of said layer containing a light-absorbing substance is 8 µm or more.

7. A process of producing a cylindrical plastics optical transmission element comprising preparing and shaping a cylindrical plastics optical transmission body (11) wherein the refractive index varies continuously and radially from the central axis (13) towards the outer cylindrical surface, bringing the thus shaped body into contact with a liquid comprising a mixture of a solvent and a light-absorbing substance, and drying to thereby form a layer (12) within the body constituting an integral part of it, said layer having a thickness of 5 µm or more and said light-absorbing substance being dispersed in said layer.

8. A process according to claim 7, wherein said shaped body is prepared by using a mixture comprising a combination of an organic polymer having a high refractive index and an organic polymer having a low refractive index.

9. A process according to claim 8, wherein polymethyl methacrylate is used as said organic polymer having a high refractive index, and a copolymer of vinylidene fluoride and tetrafluoroethylene is used as said organic polymer having a low refractive index.

10. A process according to claim 8, wherein polymethyl methacrylate is used as said organic polymer having a high refractive index, and a terpolymer of vinylidene fluoride, tetrafluoroethylene and hexafluoropropylene is used as said organic polymer having a low refractive index.

11. A process according to claim 7, wherein a black-colored oil soluble dyestuff is used as said light absorbing substance.

12. A process according to claim 7, wherein said layer containing a light-absorbing substance is formed in the thickness of 8 µm or more.

13. An array of lenses each consisting of a cylindrical optical transmission element according to claim 1.

14. An array of lenses according to claim 13, wherein said body of the cylindrical optical transmission element is constituted chiefly by a plastics material mixture comprising a combination of an organic polymer having a high refractive index and an organic polymer having a low refractive index.

15. An array of lenses according to claim 14, wherein said organic polymer having a high refractive index is polymethyl methacrylate and wherein said organic polymer having a low refractive index is a copolymer of vinylidene fluoride and tetrafluoroethylene.

16. An array of lenses according to claim 14, wherein said organic polymer having a high refractive index is polymethyl methacrylate and wherein said organic polymer having a low refractive index is a terpolymer of vinylidene fluoride, tetrafluoroethylene and hexafluoropropylene.

17. An array of lenses according to claim 13, wherein said light-absorbing substance is a black-colored oil soluble dyestuff.

18. An array of lenses according to claim 13, wherein the thickness of said layer containing light absorbing substance is 8 µm or more.

## Patentansprüche

1. Zylindrisches optisches Transmissionselement, umfassend einen zylindrischen Körper (11), worin sich der Brechungsindex kontinuierlich und radial, von der Mittelachse (13) ausgehend, in Richtung zur äußeren Zylinderoberfläche ändert, und eine ringförmige Schicht (12), die angrenzend an die äußere Zylinderoberfläche gebildet ist, und die eine lichtabsorbierende Substanz enthält,
**dadurch gekennzeichnet, daß**
der Körper aus Kunststoffmaterial hergestellt ist, wobei die Schicht innerhalb des Körpers unter Bildung eines integralen Bestandteils davon gebildet ist und eine Dicke von 5 µm oder mehr aufweist, und wobei die lichtabsorbierende Substanz in der Schicht dispergiert ist.

2. Zylindrisches optisches Transmissionselement nach Anspruch 1, **dadurch gekennzeichnet, daß** der Körper hauptsächlich durch eine Mischung aus Kunstoffmaterialen aufgebaut ist, umfassend eine Kombination aus einem organischen Polymer mit einem hohen Brechungsindex und einem organischen Polymer mit einem niedrigen Brechungsindex.

3. Zylindrisches optisches Transmissionselement nach Anspruch 2, **dadurch gekennzeichnet, daß** das organische Polymer mit einem hohen Brechungsindex Polymethylmethacrylat ist und das organische Polymer mit einem niedrigen Brechungsindex ein Copolymer aus Vinylidenfluorid und Tetrafluorethylen ist.

4. Zylindrisches optisches Transmissionselement nach Anspruch 2, **dadurch gekennzeichnet, daß** das organische Polymer mit einem hohen Brechungsindex Polymethylmethacrylat ist und das organische Polymer mit einem niedrigen Brechungsindex ein Terpolymer aus Vinylidenfluorid, Tetrafluorethylen und Hexafluorpropylen ist.

5. Zylindrisches optisches Transmissionselement nach Anspruch 1, **dadurch gekennzeichnet, daß** die lichtabsorbierende Substanz ein schwarzer, öllöslicher Farbstoff ist.

6. Zylindrisches optisches Transmissionselement nach Anspruch 1, **dadurch gekennzeichnet, daß** die Dicke der die lichtabsorbierende Substanz enthaltenden Schicht 8 µm oder mehr beträgt.

7. Verfahren zur Herstellung eines zylindrischen optischen Kunststoff-Transmissionselements, umfassend die Herstellung und Formung eines zylindrischen optischen Kunststoff-Transmissionskörpers (11), **dadurch gekennzeichnet, daß** sich der Brechungsindex kontinuierlich und radial, von der Mittelachse (13) ausgehend, in Richtung zur äußeren Zylinderoberfläche ändert, und daß der so geformte Körper in Kontakt mit einer Flüssigkeit, umfassend eine Mischung aus einem Lösungsmittel und einer lichtabsorbierenden Substanz, gebracht und getrocknet wird, um auf diese Weise eine Schicht (12) innerhalb des Körpers, einen integralen Bestandteil davon konstituierend, zu bilden, wobei die Schicht eine Dicke von 5 µm oder mehr aufweist und die lichtabsorbierende Substanz in der Schicht dispergiert ist.

8. Verfahren nach Anspruch 7, **dadurch gekennzeichnet, daß** der geformte Körper unter Verwendung einer Mischung, umfassend eine Kombination aus einem organischen Polymer mit einem hohen Brechungsindex und einem organischen Polymer mit einem niedrigen Brechungsindex hergestellt wird.

9. Verfahren nach Anspruch 8, **dadurch gekennzeichnet, daß** das Polymethylmethacrylat als das organische Polymer mit einem hohen Brechungsindex verwendet wird und ein Copolymer aus Vinylidenfluorid und Tetrafluorethylen als das Polymer mit einem niedrigen Brechungsindex verwendet wird.

10. Verfahren nach Anspruch 8, **dadurch gekennzeichnet, daß** Polymethylmethacrylat als das organisches Polymer mit einem hohen Brechungsindex verwendetet wird, und ein Terpolymer aus Vinylidenfluorid, Tetrafluorethylen und Hexafluorpropylen als das organische Polymer mit einem niedrigen Brechungsindex verwendet wird.

11. Verfahren nach Anspruch 7, **dadurch gekennzeichnet, daß** ein schwarzer, öllöslicher Farbstoff als die lichtabsorbierende Substanz verwendet wird.

12. Verfahren nach Anspruch 7, **dadurch gekennzeichnet, daß** die die lichtabsorbierende Substanz enthaltende Schicht mit einer Dicke von 8 µm oder mehr gebildet wird.

13. Linsenanordnung, wobei jede Linse aus einem zylindrischen optischen Transmissionselement nach Anspruch 1 besteht.

14. Linsenanordnung nach Anspruch 13, **dadurch gekennzeichnet, daß** der Körper des zylindrischen optischen Transmissionselementes hauptsächlich aus einer Mischung aus Kunststoffmaterialien aufgebaut ist, umfassend eine Kombination aus einem organischen Polymer mit einem hohen Brechungsindex und einem organischen Polymer mit einem niedrigen Brechungsindex.

15. Linsenanordnung nach Anspruch 14, **dadurch gekennzeichnet, daß** das organische Polymer mit einem hohen Brechungsindex Polymethylmethacrylat ist und das organische Polymer mit einem nierigen Brechungsindex ein Copolymer aus Vinylidenfluorid und Tetrafluorethylen ist.

16. Linsenanordnung nach Anspruch 14, **dadurch gekennzeichnet, daß** das organische Polymer mit einem hohen Brechungsindex Polymethylmethacrylat und das organische Polymer mit einem niedrigen Brechungsindex ein Terpolymer aus Vinylidenfluorid, Tetrafluorethylen und Hexafluorpropylen ist.

17. Linsenanordnung nach Anspruch 13, **dadurch gekennzeichnet, daß** die lichtabsorbierende Substanz ein schwarzer öllöslicher Farbstoff ist.

18. Linsenanordnung nach Anspruch 13, **dadurch gekennzeichnet, daß** die Dicke der die lichtabsorbierende Substanz enthaltenden Schicht 8 µm oder mehr beträgt.

## Revendications

1. Elément de transmission optique cylindrique comportant un corps cylindrique (11) dans lequel l'indice de réfraction varie de façon continue et dans une direction radiale depuis l'axe central (13) vers la surface cylindrique extérieure, et une couche annulaire (12) formée adjacente à ladite surface cylindrique extérieure et contenant une substance absorbant la lumière,
caractérisé en ce que
ledit corps est constitué par des matériaux plastiques, ladite couche étant formée à l'intérieur du corps de manière à former partie intégrante et ayant une épaisseur de 5 µm ou davantage, et ladite substance absorbant la lumière étant dispersée dans ladite couche.

2. Elément de transmission optique cylindrique selon la revendication 1, dans lequel ledit corps est constitué principalement par un mélange de matériaux plastiques comportant une combinaison d'un polymère organique d'indice de réfraction élevé et d'un polymère organique d'indice de réfraction bas.

3. Elément de transmission optique cylindrique selon la revendication 2, dans lequel ledit polymère organique d'indice de réfraction élevé est du poly(méthacrylate de méthyle) et dans lequel ledit polymère organique d'indice de réfraction bas est un copolymère de fluorure de vinylidène et de tétrafluoroéthylène.

4. Elément de transmission optique cylindrique selon la revendication 2, dans lequel ledit polymère organique d'indice de réfraction élevé est du poly(méthacrylate de méthyle) et dans lequel ledit polymère organique d'indice de réfraction bas est un terpolymère de fluorure de vinylidène, de tétrafluoroéthylène et d'hexafluoropropylène.

5. Elément de transmission optique cylindrique selon la revendication 1, dans lequel ladite substance absorbant la lumière est une matière colorante constituée par une huile soluble colorée en noir.

6. Elément de transmission optique cylindrique selon la revendication 1, dans lequel l'épaisseur de ladite couche contenant une substance absorbant la lumière est de 8 µm ou davantage.

7. Procédé de fabrication d'un élément de transmission optique cylindrique en matériaux plastiques comportant les étapes qui consistent à préparer et à former un corps de transmission optique cylindrique (11) en matières plastiques dans lequel l'indice de réfraction varie de façon continue et dans une direction radiale à partir de l'axe central (13) vers la surface cylindrique extérieure, à amener le corps ainsi formé en contact avec un liquide comprenant un mélange d'un solvant et d'une substance absorbant la lumière, à procéder au séchage pour former ainsi une couche (12) à l'intérieur du corps qui en constitue une partie intégrante, ladite couche ayant une épaisseur de 5 µm ou davantage et ladite substance absorbant la lumière étant dispersée dans ladite couche.

8. Procédé selon la revendication 7, dans lequel ledit corps formé est préparé en utilisant un mélange comportant une combinaison d'un polymère organique d'indice de réfraction élevé et d'un polymère organique d'indice de réfraction bas.

9. Procédé selon la revendication 8, dans lequel du poly(méthacrylate de méthyle) est utilisé comme ledit polymère organique d'indice de réfraction élevé et un copolymère de fluorure de vinylidène et de tétrafluoroéthylène est utilisé en tant que polymère organique d'indice de réfraction bas.

10. Procédé selon la revendication 8, dans lequel du poly(méthacrylate de méthyle) est utilisé en tant que polymère organique d'indice de réfraction élevé et un terpolymère de fluorure de vinylidène, de tétrafluoroéthylène et d'hexafluoropropylène est utilisé en tant que polymère organique d'indice de réfraction bas.

11. Procédé selon la revendication 7, dans lequel une matière colorante constituée par une huile soluble colorée en noir est utilisée comme ladite substance absorbant la lumière.

12. Procédé selon la revendication 7, dans lequel ladite couche contenant une substance absorbant la lumière est formée d'une épaisseur de 8 µm ou davantage.

13. Réseau de lentilles consistant chacune en un élément de transmission optique cylindrique selon la revendication 1.

14. Réseau de lentilles selon la revendication 13, dans lequel ledit corps d'élément de transmission optique cylindrique est constitué principalement par un mélange de matériaux plastiques comprenant une combinaison d'un polymère organique d'indice de réfraction élevé et d'un polymère organique d'indice de réfraction bas.

15. Réseau de lentilles selon la revendication 14, dans lequel ledit polymère organique d'indice de réfraction élevé est du poly(méthacrylate de méthyle) et dans lequel ledit polymère organique d'indice de réfraction bas est un copolymère de fluorure de vinylidène et de tétrafluoroéthylène.

16. Réseau de lentilles selon la revendication 14, dans lequel ledit polymère organique d'indice de réfraction élevé est du poly(méthacrylate de méthyle) et dans lequel ledit polymère organique d'indice de réfraction bas est un terpolymère de fluorure de vinylidène, de tétrafluoroéthylène et d'hexafluoropropylène.

17. Réseau de lentilles selon la revendication 13, dans lequel ladite substance absorbant la lumière est une matière colorante constituée par une huile soluble colorée en noir.

18. Réseau de lentilles selon la revendication 13, dans lequel l'épaisseur de ladite couche contenant la substance absorbant la lumière est de 8 µm ou davantage.
